# EUROPÄISCHE PATENTSCHRIFT

(11) **EP 1 767 424 B1**
(45) Veröffentlichungstag und Bekanntmachung des Hinweises auf die Patenterteilung: **14.11.2018**
(21) Anmeldenummer: 06019657.3
(22) Anmeldetag: 20.09.2006
(51) Int. Cl.: B60T 13/74, F16D 27/108, F16D 27/118, F16D 59/02, F16D 63/00, F16D 65/14

(54) **Vorrichtung zum Abbremsen und/oder zur Drehrichtungsumkehr eines durch einen elektromotorischen Antrieb antreibbaren Bauelements**
Apparatus for decelerating and/or inverting the sense of rotation of an element driveable by an electrical drive
Dispositif pour décélération et/ou inversion du sens de rotation d'un élément entraîné par un entraînement électrique

(30) Priorität: 26.09.2005 DE 102005045878
(43) Veröffentlichungstag der Anmeldung: 28.03.2007
(73) Patentinhaber: KNORR-BREMSE Systeme für Nutzfahrzeuge GmbH, 80809 München (DE)
(72) Erfinder: Miller, Bernhard, 71263 Weil der Stadt (DE)
(74) Vertreter: Schönmann, Kurt

(56) Entgegenhaltungen:
- EP-A2- 0 136 282
- EP-A2- 0 162 481

## Beschreibung

Die Erfindung betrifft eine Vorrichtung zum Abbremsen und/oder zur Drehrichtungsumkehr eines durch einen elektromotorischen Antrieb drehantreibaren Bauelements, insbesondere eines Läufers eines Elektromotors als Bremsaktuator einer Fahrzeugbremseinrichtung, gemäß Patentanspruch 1.

Elektromotoren werden zu vielfältigen Positionierungsaufgaben eingesetzt und finden mittlerweile auch zunehmend Anwendung in Personen- und Nutzkraftfahrzeugen. Aus der DE 34 10 006 A1 ist beispielsweise eine Bremseinrichtung eines Kraftfahrzeugs bekannt, bei welcher der Bremsaktuator durch einen Elektromotor gebildet wird.

Oft werden beim Einsatz von Elektromotoren eine schnelle Positionierung sowie eine hohe Haltekraft benötigt. Vor allem bei stärkeren Motoren, bei welchen der Läufer einen größeren Durchmesser besitzt, wirken sich die Anlauf- und Abbremsphasen störend auf die Positioniergeschwindigkeit und Verlustwärme aus. Bei kurzen und schnellen Positioniervorgängen kann es daher vorkommen, dass die gesamte Positionierzeit nur aus Beschleunigungs- und Verzögerungsphasen besteht. Daraus resultieren hohe Wärmeverluste des Elektromotors. Bei der Motorkonstruktion wird daher versucht, möglichst lange Läufer mit einem kleinen Durchmesser zu verwenden. Manche Elektromotoren besitzen eine eigene Bremseinrichtung, um möglichst schnell aus dem laufenden Betrieb in den Stillstand zu gelangen sowie um Energieverluste im Haltezustand zu vermeiden. Der damit verbundene Verschleiß dieser Bremseinrichtung muss durch entsprechende Auslegungsdimensionierung berücksichtigt werden.

Bei einer elektromotorisch betriebenen Fahrzeugbremseinrichtung ist zum Beispiel während des ABS-Betriebs eine ständige schnelle Bremsverstellung nötig. Beim Einsatz eines üblichen Elektromotors entstehen bei schnellen Bremseinstellungen wie sie für ABS-Bremsungen üblich sind, erhebliche Verluste durch das ständige Beschleunigen und Abbremsen. Da für den Betrieb einer Nutzfahrzeugbremse ein relativ großer Motor benötigt wird, fallen bei dessen Hochlaufen und Abbremsen neben den Verzögerungszeiten auch erhebliche Verlustleistungen an. Während längerer konstanter Bremsbetätigungen muss der Motor im Stillstand an beliebiger Winkelposition maximale Haltemomente bereitstellen, was zu einer weiteren Erhitzung von Elektromotor und Steuerelektronik führt.

In EP 0 136 282 A2 wird eine gattungsgemäße Vorrichtung zum Abbremsen eines durch einen elektromotorischen Antrieb drehantreibaren Bauelements offenbart. Die Vorrichtung stellt eine Auslaufbremse zum schnellen Abbremsen eines ausgeschalteten Elektromotors dar, bei der ein von einer Druckfeder axial gegen einen drehfesten Bremsbelag belasteter und axial beweglicher Bremskörper beim Einschalten des Elektromotors durch ein magnetisches Streufeld des Stators gegen die Federkräfte der Druckfeder vom Bremsbelag weg und zu einem Rotor des Elektromotors hin gezogen wird, wodurch die Auslaufbremse gelöst wird. Beim Abschalten des Elektromotors wird der Bremskörper von der Druckfeder vom Rotor weg und zum Bremsbelag hin gedrückt, wodurch Bremskräfte entstehen. Infolge von zusammen wirkenden Keil- und Schrägflächen am Bremskörper und am Rotor wird der Bremskörper zusätzlich vom Rotor weggedrückt, was die Bremskraft erhöht. In EP 0 162 481 A2 wird ein Scheibenbremsmotor offenbart, bei dem durch eine axial bewegliche, durch eine Druckfeder gegen einen Bremsbelag belastete und durch Magnetkräfte axial betätigbare Ankerscheibe eine Bremse dargestellt wird.

Der Erfindung liegt die Aufgabe zugrunde, eine Vorrichtung sowie ein Verfahren zu ihrem Betrieb zur Verfügung zu stellen, durch welche ein durch einen Elektromotor drehantreibbares Bauelement während des Laufs bei voller Drehzahl verschleiß- und energieverlustfrei in kürzester Zeit angehalten werden und bei Bedarf zusätzlich seine Drehrichtung geändert werden kann. Diese Aufgabe wird durch die Merkmale der Patentansprüche 1, 9, 11 und 13 gelöst.

### Offenbarung der Erfindung

Die erfindungsgemäße Vorrichtung ist gekennzeichnet durch
a) einen Stützabschnitt der elastischen Federeinrichtung, der drehfest abgestützt ist,
b) eine Kupplungseinrichtung, durch welche ein Kupplungsabschnitt der Federeinrichtung mit dem drehantreibbaren Bauelement drehkoppelbar oder von diesem drehentkoppelbar ist, wobei
c) bei durch die Kupplungseinrichtung mit der Federeinrichtung gekoppeltem drehantreibbaren Bauelement dessen Drehbewegungen elastische Verformungen der Federeinrichtung hervorrufen.

Zum Abbremsen des sich in Drehung befindlichen drehantreibbaren Bauelements wird es ausgehend von einem entkoppelten Zustand mit der Federeinrichtung gekoppelt, wodurch Drehschwingungen entstehen. Die Amplituden der Drehschwingungen des drehantreibbaren Bauelements werden bedingt durch die Lagerreibungsverluste dann immer geringer, wobei nach einiger Zeit eine ruhende Position eingenommen wird. Durch die dämpfende Elastizität der Federeinrichtung wird ein weiches Abbremsen des drehantreibbaren Bauelements erzielt.

Sollen die Drehschwingungen schneller beendet werden, so kann der elektromotorische Antrieb während der Drehschwingungen im Generatorbetrieb betrieben werden. Dadurch wird das drehantreibbare Bauelement in kürzester Zeit zum Stillstand gebracht. Das drehantreibbare Bauelement ist durch die Federeinrichtung während des Stillstands im wesentlichen drehfest blockiert und kann je nach Federrate stromlos hohe Haltekräfte aufnehmen. Dies ist insbesondere zum Halten einer Bremseinrichtung in zeitlich konstantem Bremsmoment oder bei einer Feststell- oder Parkbremseinrichtung von Vorteil. Falls dem elektromotorischen Antrieb und dem drehantreibbaren Bauelement ein Untersetzungsgetriebe zwischengeschaltet ist, sollte dies so ausgelegt sein, dass sich die Schwingungsamplituden bzw. das elastische Nachgeben der Federeinrichtung innerhalb der zulässigen Positionierungstoleranz bewegt.

Falls beispielsweise ein für schnelle Positionieraufgaben verwendeter Elektromotor ständig mit seiner maximalen Drehzahl betrieben wird, wird bei Annäherung an eine gewünschte Endposition dessen Läufer nicht durch eine entsprechende elektrische Motoransteuerung abgebremst und langsam zum Stillstand gebracht. Vielmehr wird mit Hilfe der erfindungsgemäßen Vorrichtung erst unmittelbar bei Erreichen der Endposition durch Koppeln beispielsweise des Läufers des Elektromotors mit der Federeinrichtung der Läufer in Drehschwingungen versetzt, welche durch das Massenträgheitsmoment des Läufers hervorgerufen werden. Neben dem aus dem Massenträgheitsmoment des Läufers herrührenden Drehmoment wird auch das auf dem Massenträgheitsmoment der durch den Elektromotor angetriebenen Bauelemente basierende Drehmoment in die angekoppelte Federeinrichtung eingeleitet. Es kommt dann nicht zu einem unnötigen Zeitverlust zum Abbremsen des Motors kurz vor Erreichen der Sollposition.

Nach Wandelung der Rotationsenergie in gespeicherte potentielle Energie der Federeinrichtung kann diese Energie genutzt werden, um den Elektromotor in entgegengesetzter Drehrichtung zu betreiben. Genauer wird ausgehend von einem entkoppelten Zustand der Läufer mit der Federeinrichtung gekoppelt und nach durch die elastische Wirkung der Federeinrichtung erfolgter Drehrichtungsumkehr von der Federeinrichtung wieder entkoppelt. Dabei kann der Elektromotor diesen Vorgang unterstützen, indem er vor oder nach dem Koppeln außer Betrieb und vor oder nach dem Entkoppeln wieder in entgegengesetzter Drehrichtung in Betrieb gesetzt wird. Diese Möglichkeit einer schnellen und praktisch verlustfreien Richtungsumkehr ist besonders dort von Vorteil, wo große Elektromotoren schnelle und verlustarme Positionierungsaufgaben erfüllen müssen. Nicht zuletzt ist eine schnelle Drehrichtungsumkehr unter Beibehalten der vollen Motordrehzahl möglich. Die Möglichkeiten eines Einsatzes eines solchen Drehrichtungswechsels für Elektromotoren sind vielfältig und besonders dort von Vorteil, wo große und massereiche Elektromotoren schnelle und energie- bzw. verlustarme Positionierungsaufgaben erfüllen müssen.

Alternativ dazu kann der Elektromotor in andauernden Drehschwingungen verharren, um hiervon ausgehend in beliebiger Drehrichtung hochzulaufen. Dann wird ausgehend von einem entkoppelten Zustand zur Herbeiführung von Drehschwingungen des Läufers dieser mit der Federeinrichtung gekoppelt und der elektromotorische Antrieb derart aktiviert, dass er die Drehschwingungen des Läufers zunächst zumindest aufrechterhält und nach einer Drehanforderung aus seiner momentanen Drehrichtung heraus mit höherer Leistung beaufschlagt wird. Damit kann der Elektromotor quasi stehend in seinem Wirkungsverhalten wie unter Maximaldrehzahl gehalten werden. Vorteilhaft wird dadurch die Rotationsenergie durch Schwingung des Läufers während dem Halten in einer Sollposition erhalten. Darüber hinaus ist nur ein geringer Energieaufwand zum Beibehalten des Drehschwingungszustandes notwendig, da lediglich die Reibungsverluste kompensiert werden müssen.

Neben deutlich besserem dynamischem Ansprechverhalten wird hierdurch auch beim Bremsen und Beschleunigen entstehende Verlustenergie weitgehend eingespart. Weiterhin werden die beim Bremsen und Hochbeschleunigen entstehenden Wärmeverluste drastisch reduziert. Dies ist insbesondere in thermisch kritischen Einsatzfällen, wie sie häufig im Fahrzeugbereich vorkommen, von Bedeutung.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt beinhaltet die Federeinrichtung wenigstens eine in Umfangsrichtung und axial elastische Schraubenfeder, welche koaxial mit dem drehantreibbaren Bauelement angeordnet ist., wobei ein Einrückweg der Kupplungseinrichtung zur Koppelung der Schraubenfeder mit dem drehantreibbaren Bauelement und ein Ausrückweg der Kupplungseinrichtung zur Entkopplung der Schraubenfeder von dem drehantreibbaren Bauelement durch eine axiale Bewegung des Kupplungsabschnitts der Schraubenfeder gebildet ist. Dann erfüllt die Schraubenfeder in einem Bauteil eine Doppelfunktion, indem sie zum einen die zum Abbremsen oder zur Richtungsumkehr notwendige Elastizität in Umfangsrichtung und zum andern auch eine axiale Elastizität bereitstellt, um die Kupplungsfunktion wahrzunehmen. Da eine solche Schraubenfeder eine kleine bewegte Masse darstellt und ein kleiner Ein- bzw. Ausrückweg ausreichend ist, ergibt sich eine geringe Reaktionszeit der Kupplungseinrichtung auf ein Kopplungsanforderungssignal hin.

Gemäß einer Weiterbildung beinhaltet die Kupplungseinrichtung wenigstens einen Elektromagneten, durch dessen gegen die Federkräfte gerichtete Magnetkräfte die axiale Bewegung des Kupplungsabschnitts der Schraubenfeder hervorgerufen wird. Wenn außerdem die Kupplungseinrichtung seitens des drehantreibbaren Bauelements eine mit diesem drehfeste Stirnverzahnung aufweist, in welche der Kupplungsabschnitt der Schraubenfeder einrastbar ist, der Stützabschnitt der Schraubenfeder und der Kupplungsabschnitt der Schraubenfeder durch entgegen gesetzte Federenden gebildet werden und das als Kupplungsabschnitt dienende Federende der Schraubenfeder mit einem ferromagnetischen Bauteil axialfest verbunden ist, welches mit dem Elektromagneten zusammenwirkt, ist die Vorrichtung gemäß der Erfindung durch eine äußerst einfache und robuste Konstruktion verwirklicht. Nicht zuletzt ist auch bei großer Schüttelbeanspruchung keine fehlerhafte Auslösung der Kupplungseinrichtung zu befürchten.

Wenn die Schraubenfeder derart ausgeführt bzw. vorgespannt ist, dass im stromlosen Zustand des Elektromagneten der gekoppelte Zustand vorliegt, wird das drehantreibbare Bauelement bzw. der Elektromotor in seiner Drehposition blockiert, was ein maximales Haltemoment ohne jegliche Verlustleistung des Motors und des Elektromagneten ermöglicht, was beispielsweise während einer Dauerbremsung zum Aufbau einer konstanten Bremskraft vorteilhaft ist.

Wenn die Kupplungseinrichtung im weiteren eine mit dem drehantreibbaren Bauelement drehfest verbundene Stirnverzahnung aufweist, in welche das als Kupplungsabschnitt ausgebildete Federende der Schraubenfeder eingreifbar ist, ist ein schnelles Einrasten des Federendes in die Stirnverzahnung durch schnelles Abbauen der Löschenergie möglich. Insbesondere ergibt sich eine kurze und konstante Magnetlösezeit durch eine hohe und in ihrer Amplitude konstante Löschspannung, unabhängig von der Höhe der Versorgungsspannung. Nicht zuletzt ergibt sich ein geringer Verschleiß der Kupplungseinrichtung, da ein positionsgenaues Einrasten in die Stirnverzahnung möglich ist.

### Zeichnungen

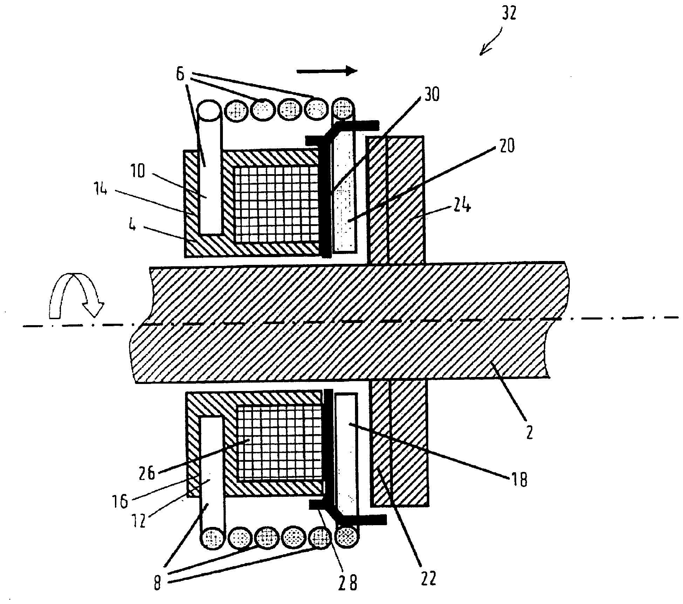

Ein Ausführungsbeispiel der Erfindung ist in der Zeichnung dargestellt und in der nachfolgenden Beschreibung näher erläutert. In der Zeichnung zeigt die einzige Zeichnung eine schematisierte Darstellung einer Vorrichtung zum Abbremsen und/oder zur Drehrichtungsumkehr eines Läufers eines Elektromotors gemäß einer bevorzugten Ausführungsform der Erfindung.

### Beschreibung des Ausführungsbeispiels

Ein Elektromotor umfasst einen Läufer 2 sowie ein Motorgehäuse 4. Vorzugsweise zwei ineinander verdrillte, mit dem Läufer 2 koaxiale Stahlschraubenfedern 6 und 8 sind jeweils mit ihren einen Enden 10, 12 mit dem Motorgehäuse 4 zumindest drehfest verbunden. Dies kann dadurch realisiert sein, dass die einen Enden 10, 12 der Schraubenfedern 6, 8 nach radial innen gebogen sind und in entsprechende Sacklochbohrungen 14, 16 des Motorgehäuses 4 eingreifen. Ebenso sind die anderen Enden 18, 20 der Schraubenfedern 6, 8 nach radial innen abgebogen.

Die Schraubenfedern 6, 8 sind axial so vorgespannt, dass ihre anderen Enden 18, 20 in eine Stirnverzahnung 22 einrasten können, die auf einer mit dem Läufer 2 mitdrehenden Scheibe 24 angeordnet ist. Durch das Einrasten der anderen Enden 18, 20 der Schraubenfedern 6, 8 in die Stirnverzahnung 22 wird eine drehfeste Verbindung des Läufers 2 mit den Schraubenfedern 6, 8 hergestellt, welche mit ihren einen Enden 10, 12 am Motorgehäuse 4 gehalten sind, so dass sich der Läufer 2 nur noch innerhalb eines Drehwinkelbereichs drehen kann, welcher durch die Elastizität der Schraubenfedern 6, 8 in Umfangsrichtung bestimmt wird, die sich hierdurch in ihrem Durchmesser etwas verkleinern.

Weiterhin ist in dem Motorgehäuse 4 ein feststehender Elektroringmagnet 26 gehalten, welcher bei Bestromen mit einer den anderen Enden 18, 20 der Schraubenfedern 6, 8 und dem Elektroringmagnet 26 zwischengeordneten, und beispielsweise durch einen radial äußeren Kragen 28 am Motorgehäuse 4 axial geführten Blechscheibe 30 zusammenwirkt, welche mit den beiden anderen Enden 18, 20 der Schraubenfedern 6, 8 verbunden ist. Durch Bestromen des Elektroringmagneten 26 wird die Blechscheibe 30 magnetisch angezogen und die beiden anderen Enden 18, 20 der Schraubenfedern geraten dadurch außer Eingriff mit der Stirnverzahnung 22, so dass der Läufer 2 wieder frei drehen kann. Anstelle des direkten Einrastens der anderen Enden 18, 20 der Schraubenfedern 6, 8 in die Stirnverzahnung 22 kann die Blechscheibe 30 auch als stirnverzahnte Scheibe ausgeführt sein, welche mit den anderen Enden 18, 20 der Schraubenfedern 6, 8 fest verbunden ist und in die komplementäre Stirnverzahnung 22 der dem Läufer 2 zugeordneten Scheibe 24 einrasten kann.

Vorzugsweise wird der mit einer solchen Vorrichtung 32 ausgestattete Elektromotor für die elektrische Betätigung einer Nutzfahrzeugbremseinrichtung verwendet. Im Falle eines Bremszuspannanforderungssignals und bei bestromtem Elektroringmagneten 26, d.h. bei von den Schraubenfedern 6, 8 entkoppeltem Läufer 2, wird der Elektromotor bis auf seine maximale Solldrehzahl beschleunigt. Nähert sich der Elektromotor seinem Zuspannsollwert, so kann die volle Maximaldrehzahl bis zum Erreichen der gewünschten Endposition beibehalten werden. Erst dann wird der Elektroringmagnet 26 entstromt, wodurch die beiden anderen Enden 18, 20 der Schraubenfedern 6, 8 in die Stirnverzahnung 4 einrasten. Durch Erzeugen einer hohen Löschspannung mit konstanter Spannungshöhe kann eine schnelle und in ihrer Verzögerungszeit konstante Einrastbewegung erreicht werden.

Da zur Ansteuerung von bürstenlosen Elektromotoren eine genaue Winkelpositionierung erforderlich ist, kann der Zeitpunkt zum Entstromen des Elektroringmagneten 26 so gewählt werden, dass die anderen Enden 18, 20 der Schraubenfedern 6, 8 trotz voller Drehgeschwindigkeit genau in die Zwischenräume der Stirnverzahnung 22 eingreifen, so dass keine schleifende Bewegung und damit nahezu kein Verschleiß entsteht. Die anderen Enden 18, 20 der Schraubenfedern 6, 8 sind radial nicht vorgespannt und werden nun durch die Läuferdrehung mitgenommen. Da die Schraubenfedern 6, 8 mit fortschreitender Läuferdrehung in Umfangsrichtung immer mehr gespannt werden, verlangsamt sich die Drehgeschwindigkeit des Läufers 2 bis er schließlich zum Stillstand kommt. Die gesamte Rotationsenergie des Läufers 2 samt einem unter Umständen angeflanschtem Getriebe oder sonstiger bewegter Massen ist nun in den Schraubenfedern 6, 8 in den Drehumkehrpunkten als potentielle Energie gespeichert. Ausgehend von einem solchen Umkehrpunkt beschleunigen die Schraubenfedern 6, 8 den Läufer 2 in die entgegen gerichtete Drehrichtung über einen Nullpunkt hinaus, in welchem die Schraubenfedern 6, 8 keine Federkräfte oder elastische Verformungen in Umfangsrichtung aufweisen bis zum gegenüberliegenden Umkehrpunkt. Wenn der Elektroringmagnet 26 weiterhin stromlos bleibt, so entsteht eine hin und her schwingende Pendelbewegung des Läufers 2.

Zum dauerhaften Halten einer Solldrehposition des Läufers 2 bei außer Betrieb gesetztem Elektromotor über einen längeren Zeitraum bleibt der Elektroringmagnet 26 stromlos, wodurch die anderen Enden 18, 20 der Schraubenfedern 6, 8 eingerastet bleiben. Die Amplituden der Drehschwingungen des Läufers 2 werden bedingt durch die Lagerreibungsverluste immer geringer, bis die Solldrehposition erreicht ist, welche der Nulllage der Schraubenfedern 6, 8 entspricht. Wenn die Drehschwingungen des Läufers 2 schnell beendet werden sollen, so kann der Elektromotor in den Generatorbetrieb geschaltet werden, in welchem der Bewegung des Läufers 2 entgegen gerichtete Drehmomente erzeugt werden. Der Elektromotor ist durch die beiden Schraubenfedern 6, 8 während des Stillstands blockiert. Ein evtl. mit dem Läufer 2 in Drehverbindung stehendes Untersetzungsgetriebe sollte so ausgelegt sein, dass sich die Schwingungsamplitude bzw. das Nachgeben der Schraubenfedern 6, 8 innerhalb der zulässigen Positionierungstoleranz bewegt.

Für eine schnelle Drehrichtungsumkehr des Elektromotors, beispielsweise bei ABS-Bremsungen, die einen schnellen Wechsel zwischen Lösen und Zuspannen der Bremse erfordern, muss der Läufer 2 nach dem Erreichen seiner Solldrehposition schnellstmöglich in die entgegen gesetzte Drehrichtung laufen können. Dies wird dadurch erreicht, dass der Elektromagnetring 26 wie bereits oben beschrieben kurz vor Erreichen der Solldrehposition bestromt wird. Die anderen Enden der Schraubenfedern 6, 8 rasten daraufhin in der Stirnverzahnung 22 ein, werden in Umfangsrichtung immer mehr gespannt und bremsen dadurch den Läufer 2 bis zum Stillstand im Umkehrpunkt. Während der Läufer 2 durch die gespeicherte potentielle Energie der Schraubenfedern 6, 8 nun in die entgegen gesetzte Drehrichtung beschleunigt wird, wird der Elektromagnetring 26 beispielsweise kurz vor dem Erreichen des Nullpunktes bestromt, wodurch die Enden 18, 20 der Schraubenfedern 6, 8 mit der Stirnverzahnung 22 außer Eingriff geraten und sich der Läufer 2 bedingt durch sein und das Massenträgheitsmoment des nachgeschalteten Getriebes weiter in der entgegen gesetzten Drehrichtung dreht.

Bedarfsweise kann der Elektromotor vor oder nach dem Koppeln außer Betrieb und vor oder nach dem Entkoppeln wieder in entgegengesetzter Drehrichtung in Betrieb gesetzt werden.

Nicht zuletzt kann mit der Vorrichtung 32 eine Solldrehposition des Läufers gehalten und durch permanente Drehschwingungen des Läufers 2 um diese Solldrehposition herum eine Bereitschaft zu einer schnellen Sollwertnachstellung erreicht werden. Hierzu wird dem Elektromotor während der Drehschwingungen vorzugsweise ständig so viel Antriebsenergie zugeführt, dass die Reibungsverluste ausgeglichen werden. Da die Reibungsverluste relativ gering sind, kann bereits mit geringer Antriebsleistung der Läufer 2 ständig im Drehschwingen gehalten werden. Kommt nun eine Anforderung zu einer Sollwertverstellung, so kann der Elektromotor jederzeit mit seiner maximalen Drehzahl in eine beliebige Drehrichtung hochlaufen, vorzugsweise in die Drehrichtung, in welche er gerade schwingt. Es ergibt sich eine Art Stand-By-Betrieb des Elektromotors, ohne dass dieser seine in der Drehschwingungen gespeicherte Energie verliert.

### Bezuaszahlenliste

- 2: Läufer
- 4: Motorgehäuse
- 6: Schraubenfeder
- 8: Schraubenfeder
- 10: Ende
- 12: Ende
- 14: Sacklochbohrung
- 16: Sacklochbohrung
- 18: Ende
- 20: Ende
- 22: Stirnverzahnung
- 24: Scheibe
- 26: Elektroringmagnet
- 28: Kragen
- 30: Blechscheibe
- 32: Vorrichtung

## Patentansprüche

1. Vorrichtung (32) zum Abbremsen und/oder zur Drehrichtungsumkehr eines durch einen elektromotorischen Antrieb (34) drehantreibbaren Bauelements (2), insbesondere eines Läufers (2) eines Elektromotors als Bremsaktuator einer Fahrzeugbremseinrichtung, beinhaltend eine elastische Federeinrichtung (6, 8), **gekennzeichnet durch**
a) einen Stützabschnitt (10, 12) der elastischen Federeinrichtung (6, 8), der drehfest abgestützt ist,
b) eine Kupplungseinrichtung (18, 20, 22, 26), durch welche ein Kupplungsabschnitt (18, 20) der Federeinrichtung (6, 8) mit dem drehantreibbaren Bauelement (2) drehkoppelbar oder von diesem drehentkoppelbar ist, wobei
c) bei durch die Kupplungseinrichtung (18, 20, 22, 26) mit der Federeinrichtung (6, 8) gekoppeltem drehantreibbaren Bauelement (2) dessen Drehbewegungen elastische Verformungen der Federeinrichtung (6, 8) hervorrufen.

2. Vorrichtung nach Anspruch 1, **dadurch gekennzeichnet, dass** die Federeinrichtung wenigstens eine in Umfangsrichtung und axial elastische Schraubenfeder (6, 8) beinhaltet, welche koaxial mit dem drehantreibbaren Bauelement (2) angeordnet ist.

3. Vorrichtung nach Anspruch 2, **dadurch gekennzeichnet, dass** ein Einrückweg der Kupplungseinrichtung (18, 20, 22, 26) zur Koppelung der Schraubenfeder (6, 8) mit dem drehantreibbaren Bauelement (2) und ein Ausrückweg der Kupplungseinrichtung (18, 20, 22) zur Entkopplung der Schraubenfeder (6, 8) von dem drehantreibbaren Bauelement (2) durch eine axiale Bewegung des Kupplungsabschnitts (18, 20) der Schraubenfeder (6, 8) gebildet ist.

4. Vorrichtung nach Anspruch 2 oder 3, **dadurch gekennzeichnet, dass** die Kupplungseinrichtung wenigstens einen Elektromagneten (26) beinhaltet, durch dessen gegen die Federkräfte gerichtete Magnetkräfte die axiale Bewegung des Kupplungsabschnitts der Schraubenfeder hervorgerufen wird.

5. Vorrichtung nach Anspruch 4, **dadurch gekennzeichnet, dass** die Schraubenfeder derart ausgeführt ist, dass im stromlosen Zustand des Elektromagneten der gekoppelte Zustand vorliegt.

6. Vorrichtung nach Anspruch 5, **dadurch gekennzeichnet, dass** die Kupplungseinrichtung seitens des drehantreibbaren Bauelements (2) eine mit diesem drehfeste Stirnverzahnung (26) aufweist, in welche der Kupplungsabschnitt (18, 20) der Schraubenfeder (6, 8) einrastbar ist.

7. Vorrichtung nach wenigstens einem der Ansprüche 2 bis 6, **dadurch gekennzeichnet, dass** der Stützabschnitt der Schraubenfeder (6, 8) und der Kupplungsabschnitt der Schraubenfeder (6, 8) durch entgegen gesetzte Federenden (10, 12 und 18, 22) gebildet werden.

8. Vorrichtung nach Anspruch 7, **dadurch gekennzeichnet, dass** das als Kupplungsabschnitt dienende Federende (18, 20) der Schraubenfeder (6, 8) mit einem ferromagnetischen Bauteil (30) axialfest verbunden ist, welches mit dem Elektromagneten (26) zusammenwirkt.

9. Verfahren zum Betrieb der Vorrichtung nach wenigstens einem der vorhergehenden Ansprüche, **dadurch gekennzeichnet, dass** ausgehend von einem entkoppelten Zustand das drehantreibbare Bauelement (2) mit der Federeinrichtung (6, 8) gekoppelt und nach durch die elastische Wirkung der Federeinrichtung (6, 8) erfolgter Drehrichtungsumkehr von der Federeinrichtung (6, 8) wieder entkoppelt wird.

10. Verfahren nach Anspruch 9, **dadurch gekennzeichnet, dass** der elektromotorische Antrieb vor oder nach dem Koppeln außer Betrieb und vor oder nach dem Entkoppeln wieder in entgegengesetzter Drehrichtung in Betrieb gesetzt wird.

11. Verfahren zum Betrieb der Vorrichtung nach wenigstens einem der Ansprüche 1 bis 8, **dadurch gekennzeichnet, dass** ausgehend von einem entkoppelten Zustand das drehantreibbare Bauelement (2) mit der Federeinrichtung (6, 8) gekoppelt und der Motorbetrieb des elektromotorischen Antriebs deaktiviert wird.

12. Verfahren nach Anspruch 11, **dadurch gekennzeichnet, dass** der elektromotorische Antrieb als Generator betrieben wird.

13. Verfahren zum Betrieb der Vorrichtung nach wenigstens einem der Ansprüche 1 bis 8, **dadurch gekennzeichnet, dass** ausgehend von einem entkoppelten Zustand zur Herbeiführung von Drehschwingungen des drehantreibbaren Bauelements (2) dieses mit der Federeinrichtung (6, 8) gekoppelt und der elektromotorische Antrieb derart aktiviert wird, dass er die Drehschwingungen des drehantriebbaren Bauelements (2) zunächst zumindest aufrechterhält und nach einer Drehanforderung aus seiner momentanen Drehrichtung heraus mit höherer Leistung beaufschlagt wird.

## Claims

1. A device 32 for braking and/or reversing the direction of rotation of a component 2 capable of being driven rotationally by an electric motor drive 34, in particular of a rotor 2 of an electric motor operating as the brake actuator of vehicle braking device, containing an elastic spring device 6, 8, **characterised by**
a) a supporting portion 10, 12 of the elastic spring device 6, 8 that is supported such that it is unable to rotate,
b) a coupling device 18, 20, 22, 26 by means of which a coupling portion 18, 20 of the spring device 6, 8 can be rotationally coupled to or rotationally decoupled from the rotationally drivable component 2, in which
c) when the rotationally drivable component 2 is coupled to the spring device 6, 8 by the coupling device 18, 20, 22, 26, the rotational movements of said rotationally drivable component 2 give rise to elastic deformations of the spring device 6, 8.

2. A device according to claim 1, **characterised in that** the spring device contains at least one circumferentially and axially elastic coil spring 6, 8, which is arranged coaxially with the rotationally driveable component 2.

3. A device according to claim 2, **characterised in that** an engagement path of the coupling device 18, 20, 22, 26 for coupling the coil spring 6, 8 to the rotationally driveable component 2 and a disengagement path of the coupling device 18, 20, 22, 26 for decoupling the coil spring 6, 8 from the rotationally driveable component 2 are formed by an axial movement of the coupling portion 18, 20 of the coil spring 6, 8.

4. A device according to claim 2 or 3, **characterised in that** the coupling device contains at least one solenoid 26, which produces magnetic forces directed against the spring forces that give rise to the axial movement of the coupling portion of the coil spring.

5. A device according to claim 4, **characterised in that** the coil spring is configured such that the coupled state exists when the solenoid is in the currentless state.

6. A device according to claim 5, **characterised in that** on the side of the rotationally drivable component 2 the coupling device has a toothed front face 26 that is fixed to said rotationally drivable component 2 such that it is unable to rotate and in which the coupling portion 18, 20 of the coil spring 18, 20 is able to engage.

7. A device according to at least one of claims 2 to 6, **characterised in that** the supporting portion of the coil spring 6, 8 and the coupling portion of the coil spring 6, 8 are formed by opposing ends of the spring 10, 12 and 18, 22.

8. A device according to claim 7, **characterised in that** spring end 18, 20 of the coil spring 6, 8 serving as the coupling is connected in an axially fixed manner to a ferromagnetic component 30, which cooperates with the solenoid 26.

9. A method for operating the device according to at least one of the preceding claims, **characterised in that** starting from a decoupled state the rotationally driveable component 2 is coupled to the spring device 6, 8 and then, once the direction of rotation of the spring device 6, 8 has been reversed by the elastic effect of the spring device 6, 8, decoupled from the spring device 6, 8 again.

10. A method according to claim 9, **characterised in that** the electric motor drive is stopped before or after coupling and started again in the opposite direction of rotation before or after decoupling.

11. A method for operating the device according to at least one of claims 1 to 8, **characterised in that** starting from a decoupled state the rotationally drivable component 2 is coupled to the spring device 6, 8 and the motor operation of the electric motor drive is deactivated.

12. A method according to claim 11, **characterised in that** the electric motor drive is operated like a generator.

13. A method for operating the device according to at least one of claims 1 to 8, **characterised in that** starting from a decoupled state in order to induce rotational vibrations of the rotationally drivable component 2 said rotationally drivable component 2 is coupled to the spring device 6, 8 and the electric motor drive is activated such that it initially at least maintains the rotational vibrations of the rotationally drivable component 2 and, following a request to change the direction of rotation, is subjected to greater power.

## Revendications

1. Dispositif (32) pour freiner et/ou inverser le sens de rotation d'un élément (2) pouvant être entraîné en rotation par un entraîneur (34) électrique, notamment un rotor (2) d'un moteur électrique en tant qu'actionneur de frein d'un dispositif de frein d'un véhicule, comportant un dispositif (6, 8) à ressort élastique, **caractérisé par**
a) une section (10, 12) de support du dispositif (6, 8) à ressort, qui est supportée fixe en rotation,
b) un dispositif (18, 20, 22, 26) de couplage par lequel une section (18, 20) de couplage du dispositif (6, 8) à ressort peut être couplée avec l'élément (2) pouvant être entraîné en rotation ou être découplée de l'élément (2) pouvant être entraîné en rotation, dans lequel
c) le déplacement en rotation de l'élément (2) pouvant être entraîné en rotation couplé avec le dispositif (6, 8) à ressort par l'intermédiaire du dispositif (18, 20, 22, 26) de couplage provoque des déformations élastiques du dispositif (6, 8) à ressort.

2. Dispositif suivant la revendication 1, **caractérisé en ce que** le dispositif à ressort comporte au moins un ressort (6, 8) hélicoïdal élastique axialement et s'étendant périphériquement, qui est disposé coaxial avec l'élément (2) pouvant être entraîné en rotation.

3. Dispositif suivant la revendication 2, **caractérisé en ce qu'**il est réalisé un déplacement d'introduction du dispositif (18, 20, 22, 26) de couplage pour le couplage du ressort (6, 8) hélicoïdal avec l'élément (2) pouvant être entraîné en rotation et un déplacement de sortie du dispositif (18, 20, 22) de couplage pour un découplage du ressort (6, 8) hélicoïdal de l'élément (2) pouvant être entraîné en rotation, par l'intermédiaire d'un déplacement axial de la section (18, 20) de couplage du ressort (6, 8) hélicoïdal.

4. Dispositif suivant la revendication 2 ou 3, **caractérisé en ce que** le dispositif de couplage comporte au moins un électroaimant (26), par lequel des forces magnétiques orientées à l'encontre des forces du ressort provoquent le déplacement axial de la section de couplage du ressort hélicoïdal.

5. Dispositif suivant la revendication 4, **caractérisé en ce que** le ressort hélicoïdal est réalisé de sorte que l'état couplé correspond à l'état sans courant de l'électroaimant.

6. Dispositif suivant la revendication 5, **caractérisé en ce que** le dispositif de couplage du côté de l'élément (2) pouvant être entraîné en rotation comporte un engrenage (26) fixe en rotation avec l'élément (2) pouvant être entraîné en rotation, dans lequel peut engrener la section (18, 20) de couplage du ressort (6, 8) hélicoïdal.

7. Dispositif suivant au moins l'une des revendications 2 à 6, **caractérisé en ce que** la section de support du ressort (6, 8) hélicoïdal et la section de couplage du ressort (6, 8) hélicoïdal sont formées par des extrémités (10, 12 et 18, 22) opposées du ressort.

8. Dispositif suivant la revendication 7, **caractérisé en ce que** l'extrémité (18, 20) de ressort du ressort (6, 8) hélicoïdal servant de section de couplage est reliée de manière fixe axialement avec un composant (30) ferromagnétique, qui coopère avec l'électroaimant (26).

9. Procédé pour faire fonctionner le dispositif suivant au moins l'une des revendications précédentes, **caractérisé en ce que**, à partir d'un état découplé, l'élément (2) pouvant être entraîné en rotation est couplé avec le dispositif (6, 8) à ressort et, après l'inversion du sens de rotation s'effectuant par l'action élastique du dispositif (6, 8) à ressort, est de nouveau découplé d'avec le dispositif (6, 8) à ressort.

10. Procédé suivant la revendication 9, **caractérisé en ce que** l'entraînement électrique avant ou après le couplage est mis hors service et avant ou après le découplage est mis à nouveau en service dans le sens de rotation opposé.

11. Procédé pour faire fonctionner le dispositif suivant au moins l'une des revendications 1 à 8, **caractérisé en ce que**, à partir d'un état découplé de l'élément (2) pouvant être entraîné en rotation, l'élément (2) est couplé avec le dispositif (6, 8) à ressort et l'entraînement par moteur de l'entraîneur électrique est désactivé.

12. Procédé suivant la revendication 11, **caractérisé en ce que** l'entraîneur électrique fonctionne en tant que générateur.

13. Procédé pour faire fonctionner le dispositif suivant au moins l'une des revendications 1 à 8, **caractérisé en ce que**, à partir d'un état découplé pour provoquer des oscillations de rotation de l'élément (2) pouvant être entraîné en rotation, ce dernier est couplé avec le dispositif (6, 8) à ressort et l'entraînement électrique est activé de sorte que d'abord il maintient au moins les oscillations de rotation de l'élément (2) pouvant être entraîné en rotation et, après une contrainte de rotation, il est alimenté à partir de son sens de rotation du moment en une puissance plus élevée.
